# EUROPEAN PATENT SPECIFICATION

(11) **EP 2 383 958 B1**
(45) Date of publication and mention of the grant of the patent: **17.08.2016**
(21) Application number: 10161932.8
(22) Date of filing: 04.05.2010
(51) Int. Cl.: H04L 29/08

(54) **Method and system for open-ended receiver telecommunications**
Verfahren und System für Empfängertelekommunikationen mit offenem Ende
Procédé et système pour télécommunications de récepteur à extrémité ouverte

(30) Priority: 27.04.2010 US 328216 P; 27.04.2010 GB 201007004
(43) Date of publication of application: 02.11.2011
(73) Proprietor: Summit-Tech Multimedia Communications, Inc., Montreal QC H7M 4N2 (CA)
(72) Inventor: Di Giovanni, Alido, Laval Québec H7E 5H5 (CA)
(74) Representative: Dunleavy, Kevin James

(56) References cited:
- WO-A1-2006/005122
- WO-A1-2009/070138
- WO-A2-2007/124504
- US-A1- 2007 162 569

## Description

In today's telecommunications networks, signals for live communications are established by connecting the initiator of the communications ("the Initiators") with the known and predetermined receivers ("the Receivers") they have chosen. Moreover, live communications can only be established within the limited time delays predetermined by network operators with respect to the time delay between the initiation by the Initiator and the acceptance by the Receiver.

WO 2007/124504 describes a method and system for the collection and distribution of sense-on-demand data. The system includes a query prefilter that generates metadata terms. The potential responders to requests in the method and system of WO 2007/124504 are identified by the sense-on-demand system using the metadata terms generated by the system.

WO 2006/005122 describes a system of telecommunication including a means whereby an initiator can initate a request to communicate with an open-ended set of unknown potential responders in a live communication session. Potential responders are identified through certain shared characteristics determined by the initiator through a computer program.

WO 2009/070138 describes the use of a preference profile referring to the characteristics the user seeks in potential members of a geosocial network. Upon mutual acceptance, a real-time communications link is provided between the matched users.

The present invention as claimed in claims 1 and 8, enables Initiators to select a group of as-yet unknown and undetermined Receivers - based on characteristics such as physical location, regional affiliation, common ideas as determined by keyword searches, and other characteristics common to the selected group of Receivers - whom they wish to initiate a live communication session with. The Receiver is actually determined only if and when one or more qualified Receiver(s) elect to accept the invitation to communicate. Moreover, an initiation to communicate may remain active for an undetermined time period, until a qualified Receiver elects to answer, or until the Initiator decides to terminate it.

### DETAILED DESCRIPTION OF EMBODIMENTS OF THE INVENTION

In one aspect, invention consists of a computer program (the "Software") to be installed on a personal computer, mobile phone, smart phone or other handheld device, said computer program having the following technical features:
Enabling an Initiator to initiate a request to communicate with an open ended set of as-yet unknown potential Responders in a live communication session, said Responders being identified through certain shared characteristics determined by the Initiator (i.e. physical location, attendance at event, identification with a concept or idea, etc.). The Software is carried out on a personal computer, laptop, smart phone, mobile phone or other handheld device., wherein said computer program simultaneously produces a user interface in the Initiator's and the Responder's computer, laptop, mobile phone, smart phone or handheld device each with the name of the Initiator, the list of potential Responders having accepted to begin the session and the selection criteria determined by Initiator to identify the Receivers.

Other embodiments of the invention may include the following technical features.

Enabling the identification of potential Responders. The Initiator may input certain search criteria such as geographical location, regional affiliation, attendance at events, identification with common ideas and/or concepts as determined by keyword and/or other search criteria on the program's user interface, and the computer program then automatically remotely determines a list of potential Responders by searching databases comprising of updated GPS locations and information uploaded onto the program interface by potential Responders, and sends visual message signals back to the Initiator informing Initiator of information regarding the remotely identified Responders (such as name and other information uploaded by Responders), granting the Initiator the option of establishing a live communication session with any of the Responders the Initiator chooses by clicking on a visual icon representing said Responder.

Enabling a request for communication initiated by an Initiator to an open-ended set of as-yet unknown and undetermined potential Responders to remain active indefinitely until either one or many Responder(s) elects to accept the communication session requested by the Initiator, or until the Initiator elects to terminate it, the whole through a computer program to be carried out on a personal computer or laptop, wherein said computer program simultaneously produces a similar user interface in the Initiator's and the Responder's computer with the name of the Initiator, the selection criteria of the Initiator and the time the initiation to communicate was issued.

Enabling an Initiator to establish a live communication session with an open ended set of potential Responders, said live communication session consisting in the accurate, direct and live transmission of voice communications, pre-recorded audio, video, photo and/or audiovisual content, the whole through the transmission, by said computer program, of such communication elements, rendered between computers, between computers and mobile phones, smart phones or other handheld devices, or between mobile phones, smart phones, or other handheld devices.

Enabling a request for communication initiated by an Initiator to an open-ended set of as-yet unknown and undetermined potential Responders to remain active indefinitely until either one or many Responder(s) elects to accept the communication session requested by the Initiator, or until the Initiator elects to terminate it, the whole through a computer program to be carried out on a mobile phone, smart phone (i.e. Blackberry, iPhone, etc.), or other handheld device, wherein said computer program simultaneously produces a similar user interface in the Initiator's and the Responder's mobile phone, smart phone or handheld device, with the name of the Initiator, the selection criteria of the Initiator and the time the initiation to communicate was issued

### Technical Problems Solved:

Today's means of live communications do not offer the possibility of communicating with an open-ended set of Receivers based on general characteristics such as location or identification with an idea or concept. More specifically, there exists no software solution enabling Initiators of live communication signals to seek to initiate live communications (involving voice or data transmission, such as video, photo or audio-visual content) with an undetermined grouping of Receivers determined by physical location, idea identification or other characteristics of the Receivers selected by the Initiator. In other words, today's software for establishing live communications work with closed communication loops only (i.e. the identification of a precise Initiator and a precise Receiver), said loops being closed at the very the moment the communication signal is initiated. Whether or not the Receiver elects to answer, the Receiver or Receivers is (are) determined and fixed at the time of signal initiation. The present system offers the Initiator the possibility, through a computer program to be implemented through a computer, smart phone or other device capable of connecting digital data with a telecommunication network, to initiate a communication with an open-ended set of Receivers based on general characteristics shared by a group of receivers. Said computer program offers the possibility to initiate an immediate live communication session with the members of the group of potential Receivers which elect to establish said communication session. The computer program in question enables Initiators and these groups of potential Receivers to establish communication sessions in real time, involving voice or other data (photo, video or audio-visual content). The computer program enables Initiators to identify the group of potential Receivers based on location (through GPS satellite positioning as determined by the signals emitted by Receivers' smart phones or computers, for example), or on a set of characteristics the Receivers have entered on the computer program's interface (i.e. belonging to a certain national or ethnic group, belonging to a group of fans of a musical band or movie, etc.). The computer program also grants to Initiators the means to combine group characteristics, and to only initiate a live communication session with that group of potential Receivers that qualify under the criteria determined by the Initiator. The technical problem solved is therefore the current impossibility of communicating with an open ended set of receivers using currently available software or live communications systems. Moreover, the software makes searching databases of existing potential Receivers available in a reasonable time delay from the time the Initiator has initiated a request to communicate.

Today's systems of live communications only enable an Initiator to initiate a communication with a Receiver within a limited time period determined by the operator of the communication network in question. For example, a phone call initiation request will expire after a predetermined number of rings, as determined by the phone carrier. The present system enables Initiators, through a computer program operated on computers, smart phones, or other devices, to maintain a request to communicate indefinitely, or until potential Receivers elect to answer it. The computer program thus creates the possibility of leaving a request to communicate via a live communication session in a pending state for an undetermined period of time, which is an outcome that no current software or other system of communication has been capable of create. The technical problem solved is therefore that of maintaining a request to initiate a live communication session with a group of potential Receivers for an indefinite period of time and irrespective of time constraints imposed by network operators, until either the Initiator or the Receiver elects to terminate the request to communicate.

### EXAMPLE

In a typical application of the Invention, an Initiator enters a request to communicate or request live video or photos with someone (anyone) at an event being held at a specific venue. The request can be made, for example, via a personal computer, a mobile phone or a smart phone, on which a software or application embodying the Invention has been previously installed. The Initiator performs this action by entering the business name of the venue in a search field. The system will then propose to the Initiator possible results on a map of locations. The Initiator can then initiate the request. At this stage, the communication loop is thus entirely open-ended and undetermined with respect to actual Receivers.

Other users of the communication network being used by the Initiator (i.e. the potential Responders), automatically selected based on parameters defined by an intelligent network and as per criteria entered by the Initiator, are then notified of the Initiator's request to communicate. The selected Responders are then granted the option to connect to the session initiated by the Initiator and to establish a live session, for example an audio phone call, a photo sharing or a live video streaming session. At this stage, and only once each Receiver elects to connect to the session, are the potential communication loops determined with respect to each potential Receiver.

The system will then present the Initiator with the submissions of the Responders, in the form of a list with previews of streams which will be transmitted in real-time to the Initiator. The Initiator can then select which session(s) he/she wishes to connect to, based on meta-data included with the stream such as: the type of media being sent, the precise location of the Responder, the contact name, the Responder's reputation as determined by social networking data, etc. Only once the Initiator decides to connect with a Receiver in an actual communication session are the communication loops actualized with respect to an actual Receiver.

## Claims

1. A system of telecommunication comprising: means whereby an Initiator may initiate a request to communicate with an open ended set of as-yet unknown potential Responders in a live communication session, wherein said Responders are identified through selection criteria determined by the Initiator through a computer program to be carried out on a personal computer, laptop, smart phone, mobile phone or other handheld device **characterized in that** said computer program simultaneously produces a similar user interface in the Initiator's and the Responder's personal computer, laptop mobile phone, smart phone or handheld device each with the name of the Initiator, a list of potential Responders having accepted to begin the session and the selection criteria determined by Initiator to identify the Responders.

2. The system of telecommunication as claimed in claim 1, wherein the computer program automatically remotely determines the list of potential Responders by searching databases comprising GPS locations and information uploaded onto a program interface by potential Responders, and sends visual message signals back to the Initiator informing the Initiator of information regarding the remotely identified Responders and said system grants the Initiator the option of establishing a live communication session with any of the Responders the Initiator chooses by clicking on a visual icon representing said Responder.

3. The system of telecommunication as claimed in any one of claims 1-2, wherein a request for communication initiated by the Initiator to an open-ended set of as-yet unknown and undetermined potential Responders may remain active indefinitely until either one or more Responders elects to accept the communication session requested by the Initiator, or until the Initiator elects to terminate the request.

4. The system of telecommunication as claimed in any one of claims 1-3, wherein the computer program enables the Initiator to establish the live communication session with the open ended set of potential Responders, said live communication session consisting of an accurate, direct and live transmission of voice communications, pre-recorded audio, video, photo and/or audiovisual content, the whole through the transmission, by said computer program, of such communication elements, rendered between said personal computers or laptops, between said personal computers or laptops and said mobile phones, said smart phones or other of said handheld devices, or between said mobile phones, said smart phones, or other said handheld devices.

5. The system of telecommunication as claimed in any one of claims 1-4, wherein said system is carried out on said mobile phone, said smart phone, or said other handheld device.

6. The system of telecommunication as claimed in any one of claims 1-5, wherein said computer program simultaneously produces the similar user interface in the Initiator's and the Responder's computer with the name of the Initiator, the list of potential Responders having accepted to begin the session and the selection criteria determined by Initiator to identify the Responders.

7. The system of telecommunication as claimed in any one of claims 1-6, wherein said selection criteria comprise one or more of geographic location, regional affiliation, attendance at events, identification with common concepts and/or ideas as determined by keyword.

8. A method of telecommunication comprising the steps of:
(a) initiating a request for communication by an initiator to an open-ended set of as-yet unknown and undetermined potential responders in a live communication session by inputting selection criteria determined by the initiator for identification of said potential responders,
(b) identifying potential responders based on said input selection criteria,
(c) sending the request for communication to the identified potential responders,
(d) receiving an election to accept the request for communication from one or more of said potential responders, and
(e) initiating the communication between the initiator and at least some of the potential responders which elected to accept the request for communication,
wherein said responders are identified in (b) through the input selection criteria determined by the initiator through a computer program to be carried out on a personal computer, laptop, smart phone, mobile phone or other handheld device,
**characterized in that** step (e) comprises the steps of:
(e1) producing a similar user interface for the initiator and
(e2) for each responder, and
(c3) initiating the communication between the initiator and the potential responders, whereby said produced user interfaces are employed to facilitate the initiation and carrying out of the communication, wherein
said computer program simultaneously produces the similar user interface in the initiator's and the responder's personal computer, laptop mobile phone, smart phone or handheld device each with the name of the initiator, the list of potential responders having accepted to begin the session and the selection criteria determined by initiator to identify the Responders.

## Patentansprüche

1. Telekommunikationssystem, Mittel umfassend, durch die ein Initiator eine Anfrage initiieren kann, um mit einem offenendigen Satz bislang unbekannter potenzieller Responder in einer Live-Kommunikationssitzung zu kommunizieren, wobei die Responder mittels Auswahlkriterien identifiziert werden, die vom Initiator mittels eines auf einem PC, Laptop-Computer, Smartphone, Mobiltelefon oder auf einem anderen von Hand gehaltenen Gerät ausgeführten Computerprogramm bestimmt werden, **dadurch gekennzeichnet, dass** das Computerprogramm gleichzeitig eine ähnliche Benutzerschnittstelle auf dem PC, Laptop-Computer, Smartphone, Mobiltelefon oder auf einem anderen von Hand gehaltenen Gerät des Initiators und des Responders jeweils mit dem Namen des Initiators, einer Liste potenzieller Responder, die die Annahme des Sitzungsbeginns angezeigt haben, und mit den vom Initiator zur Identifizierung der Responder bestimmten Auswahlkriterien erzeugt.

2. Das Telekommunikationssystem nach Anspruch 1, wobei das Computerprogramm mittels der Durchsuchung von Datenbanken, die GPS-Orte und von potenziellen Respondern über eine Benutzerschnittstelle heraufgeladene Informationen umfassen,
die Liste der potenziellen Responder automatisch durch Fernbestimmung festlegt und visuelle Mitteilungssignale an den Initiator zurücksendet, um den Initiator der Informationen über die durch Femidentifizierung festgelegten Responder zu informieren, und das System gibt dem Initiator die Option, durch Anklicken eines visuellen Symbols, das jeweils für einen gegebenen Responder steht, eine Live-Kommunikationssitzung mit einem beliebigen vom Initiator gewählten Responder herzustellen.

3. Das Telekommunikationssystem nach Anspruch 1-2, wobei eine vom Initiator initiierte Kommunikationsanfrage an einen offenendigen Satz bislang unbekannter und unbestimmter potenzieller Responder auf unbestimmte Zeit aktiv bleiben kann, bis entweder einer oder mehrere Responder sich entscheiden, die Anfrage des Initiators zur Aufnahme einer Kommunikationssitzung anzunehmen, oder bis der Initiator sich entscheidet, die Anfrage zu terminieren.

4. Das Telekommunikationssystem nach einem der Ansprüche 1-3, wobei das Computerprogramm es dem Initiator ermöglicht, die Live-Kommunikationssitzung mit dem offenendigen Satz potenzieller Responder aufzubauen, und die Live-Kommunikationssitzung besteht aus einer korrekten, direkten Live-Übertragung von Sprachkommunikationen, vorab aufgezeichneten Audio-, Video-, Foto- bzw. Audiovideoinhalten, und dies erfolgt insgesamt mithilfe des Computerprogramms durch die Übertragung solcher Kommunikationselemente zwischen den PCs oder Laptop-Computern, zwischen den PCs oder Laptop-Computern und Mobiltelefonen, den Smartphones oder den anderen von Hand gehaltenen Geräten oder zwischen den Mobiltelefonen, den Smartphones oder den anderen von Hand gehaltenen Geräten.

5. Das Telekommunikationssystem nach einem der Ansprüche 1-4, wobei das System auf dem Mobiltelefon, Smartphone oder auf dem anderen von Hand gehaltenen Gerät ausgeführt wird.

6. Das Telekommunikationssystem nach einem der Ansprüche 1-5, wobei das Computerprogramm die ähnliche Benutzerschnittstelle gleichzeitig auf dem Computer des Initiators und dem des Responders mitsamt dem Namen des Initiators, der Liste potenzieller Responder, die den Sitzungsbeginn angenommen haben, und den vom Initiator bestimmten Auswahlkriterien zur Identifizierung der Responder erzeugt.

7. Das Telekommunikationssystem nach einem der Ansprüche 1-6, wobei die Auswahlkriterien ein oder mehrere Kriterien von geografischem Ort, regionaler Zuordnung, Veranstaltungsteilnahme, Identifizierung mit üblichen Konzepten bzw. Ideen umfassen, die mittels Schlüsselwort bestimmt werden,

8. Telekommunikationsverfahren, das folgende Schritte umfasst, das:
(a) Initiieren einer Kommunikationsanfrage durch einen Initiator in einer Live-Kommunikationssitzung, die an einen offenendigen, bislang unbekannten und unbestimmten Satz potenzieller Responder gerichtet ist, wobei die Responder durch die Eingabe von durch den Initiator bestimmten Auswahlkriterien identifiziert werden,
(b) Identifizieren der potenziellen Responder basierend auf den eingegebenen Auswahlkriterien,
(c) Senden der Kommunikationsanfrage an die identifizierten potenziellen Responder,
(d) Empfangen der Annahmeentscheidung der Kommunikationsanfrage von einem oder mehreren der potenziellen Responder, und
(e) Initiieren der Kommunikation zwischen dem Initiator und mindestens mehr als einem der potenziellen Responder, die für die Annahme der Kommunikationsanfrage optierten,
wobei die Responder unter (b) durch die vom Initiator bestimmten Auswahlkriterien mittels des Computerprogramms, das auf einem PC, Laptop-Computer, Smartphone, Mobiltelefon oder auf einem anderen von Hand gehaltenen Gerät ausgeführt wird, identifiziert werden,
**dadurch gekennzeichnet, dass** der Schritt (e) folgende Schritte umfasst, das:
(e1) Erzeugen einer ähnlichen Benutzerschnittstelle für den Initiator und
(e2) für jeden Responder, und das
(e3) Initiieren der Kommunikation zwischen dem Initiator und den potenziellen Respondem, wobei die erzeugten Benutzerschnittstellen zur Erleichterung der Initiierung und Durchführung der Kommunikation dienen, wobei
das Computerprogramm gleichzeitig auf dem PC, Laptop-Computer, Mobiltelefon, Smartphone oder einem von Hand gehaltenen Gerät des Initiators und der Responder die ähnliche Benutzerschnittstelle erzeugt mitsamt dem Namen des Initiators, der Liste potenzieller Responder, die die Annahme des Sitzungsbeginns angezeigt haben, und den vom Initiator zur Identifizierung der Responder bestimmten Auswahlkriterien.

## Revendications

1. Le système de télécommunication comprenant : un moyen grâce auquel un initiateur peut lancer une requête pour communiquer avec un ensemble ouvert de Répondeurs potentiels encore inconnus dans une session de communication en direct, dans lequel lesdits Répondeurs sont identifiés par le biais de critères de sélection déterminés par l'initiateur par l'intermédiaire d'un programme informatique à mettre en oeuvre sur un ordinateur personnel, un ordinateur portable, un téléphone intelligent, un téléphone mobile ou un autre dispositif portable, **caractérisé en ce que** ledit programme informatique produit simultanément une interface utilisateur similaire dans l'ordinateur personnel, l'ordinateur portable, le téléphone mobile, le téléphone intelligent ou un autre dispositif portable de l'initiateur et du répondeur, chacune avec le nom de l'initiateur, une liste des Répondeurs potentiels ayant accepté de commencer la session et les critères de sélection déterminés par l'initiateur pour identifier les Répondeurs.

2. Le système de télécommunication selon la revendication 1, dans lequel le programme informatique détermine automatiquement à distance la liste de Répondeurs potentiels par la recherche de bases de données comprenant des localisations GPS et des informations téléchargées sur une interface de programme par des Répondeurs potentiels, et renvoie des signaux de messages visuels à l'initiateur informant l'initiateur des informations concernant les Répondeurs identifiés à distance et ledit système attribue à l'initiateur l'option d'établir une session de communication en direct avec n'importe lequel des Répondeurs que l'initiateur a choisi en cliquant sur une icône visuelle représentant ledit répondeur.

3. Le système de télécommunication selon l'une quelconque des revendications 1 à 2, dans lequel une demande de communication lancée par l'initiateur vers un ensemble ouvert des Répondeurs potentiels encore indéterminés et inconnus peut rester active indéfiniment jusqu'à ce qu'un ou plusieurs Répondeurs choisissent d'accepter la session de communication demandée par l'initiateur, ou jusqu'à ce que l'initiateur choisisse de mettre fin à la requête.

4. Le système de télécommunication selon l'une quelconque des revendications 1 à 3, dans lequel le programme informatique permet à l'initiateur d'établir la session de communication en direct avec l'ensemble ouvert de Répondeurs potentiels, ladite session de communication en direct se composant d'une transmission en direct de communications vocales précise et directe, d'audio préenregistré, de vidéo, de photo et/ou d'un contenu audiovisuel, l'ensemble traversant la transmission, par ledit programme informatique, de ces éléments de communication, rendus entre lesdits ordinateurs personnels ou ordinateurs portables, entre lesdits ordinateurs personnels ou ordinateurs portables et lesdits téléphones mobiles, lesdits téléphones intelligents ou un autre desdits dispositifs portables, ou entre lesdits téléphones mobiles, lesdits téléphones intelligents, ou un autre desdits dispositifs portables.

5. Le système de télécommunication selon l'une quelconque des revendications 1 à 4, dans lequel ledit système est mis en oeuvre sur ledit téléphone mobile, ledit téléphone intelligent, ou ledit autre dispositif portable.

6. Le système de télécommunication selon l'une quelconque des revendications 1 à 5, dans lequel ledit programme informatique produit simultanément l'interface utilisateur similaire dans l'ordinateur de l'initiateur et du répondeur avec le nom de l'initiateur, la liste des Répondeurs potentiels ayant accepté de commencer la session et les critères de sélection déterminés par l'initiateur pour identifier les Répondeurs.

7. Le système de télécommunication selon l'une quelconque des revendications 1 à 6, dans lequel lesdits critères de sélection comprennent un ou plusieurs éléments parmi une localisation géographique, une affiliation régionale, une participation à des événements, une identification à des concepts communs et/ou des idées comme déterminé par un mot-clé.

8. Procédé de télécommunication comprenant les étapes consistant à :
(a) lancer une requête de communication par un initiateur vers un ensemble ouvert de Répondeurs potentiels encore indéterminés et inconnus dans une session de communication en direct en entrant des critères de sélection déterminés par l'initiateur pour une identification desdits Répondeurs potentiels,
(b) identifier des Répondeurs potentiels sur la base desdits critères de sélection entrés,
(c) envoyer la requête de communication aux Répondeurs potentiels identifiés,
(d) recevoir un choix d'acceptation de la requête pour une communication depuis un ou plusieurs desdits Répondeurs potentiels, et
(e) lancer la communication entre l'initiateur et au moins certains des Répondeurs potentiels qui ont choisi d'accepter la requête de communication,
dans lequel lesdits Répondeurs sont identifiés dans (b) par le biais des critères de sélection entrés déterminés par l'initiateur par l'intermédiaire d'un programme informatique à mettre en oeuvre sur un ordinateur personnel, un ordinateur portable, un téléphone intelligent, un téléphone mobile ou un autre dispositif portable,
**caractérisé en ce que** l'étape (e) comprend les étapes consistant à :
(e1) produire une interface utilisateur similaire pour l'initiateur et
(e2) pour chaque répondeur, et
(e3) lancer la communication entre l'initiateur et les Répondeurs potentiels, moyennant quoi lesdites interfaces utilisateurs produites sont utilisées pour faciliter le lancement et la mise en oeuvre de la communication, dans lequel
ledit programme informatique produit simultanément l'interface utilisateur similaire dans l'ordinateur personnel, l'ordinateur portable, le téléphone mobile, le téléphone intelligent ou un dispositif portable du répondeur et de l'initiateur, chacune avec le nom de l'initiateur, la liste des Répondeurs potentiels ayant accepté de commencer la session et les critères de sélection déterminés par l'initiateur pour identifier les Répondeurs.
